# EUROPÄISCHE PATENTSCHRIFT

(11) **EP 0 567 017 B1**
(45) Veröffentlichungstag und Bekanntmachung des Hinweises auf die Patenterteilung: **19.06.1996**
(21) Anmeldenummer: 93106239.2
(22) Anmeldetag: 16.04.1993
(51) Int. Cl.: F16L 3/13, F16L 3/22, F16B 21/08

(54) **Halteelement aus Kunststoff**
Plastic retaining element
Elément de support en plastique

(30) Priorität: 22.04.1992 DE 4213231
(43) Veröffentlichungstag der Anmeldung: 27.10.1993
(73) Patentinhaber: TRW United-Carr GmbH & Co. KG, D-67677 Enkenbach-Alsenborn (DE)
(72) Erfinder: Rückwardt, Hans-Werner, W-6719 Eisenberg (DE)
(74) Vertreter: Eder, Eugen, Dipl.-Ing.

(56) Entgegenhaltungen:
- DE-A- 2 013 147
- DE-A- 4 034 546
- DE-U- 7 012 495
- GB-A- 2 219 342
- US-A- 4 566 660
- US-A- 5 113 717

## Beschreibung

Die Erfindung bezieht sich auf ein Halteelement aus Kunststoff, mit einem, einen Lagerbereich aufweisenden ersten Teil aus hartem Material zur Aufnahme mindestens eines rohrförmigen Teils, einem darin eingelagerten zweiten Teil aus weichem, dämpfendem Material und einem in diesem über eine durchgehende Öffnung eingelagerten, einen Haltebereich aufweisenden dritten Teil aus hartem Material. Dieser Stand der Technik ist aus der EP 0 483 636 A1,die unter Art. 54(3) fällt, bekannt.

Bezüglich der Ausgestaltung des Haltebereichs des dritten Teils ist bei dem vorgenannten Halteelement bereits vorgeschlagen worden, diesen als profilierte Bolzenaufnahmeöffnung, als Klippelement oder als Profilbolzen auszubilden. Als Ausführungsbeispiel liegt lediglich die Ausgestaltung als profilierte Bolzenaufnahmeöffnung vor, wohingegen weitere Gestaltungsmöglichkeiten des Haltebereichs des dritten Teils nicht in konstruktiver Durchbildung offenbart sind. Damit ergibt sich eine Einschränkung der Gestaltung des Haltebereichs des dritten Teils dieses Halteelements.

Der vorliegenden Erfindung liegt damit die Aufgabe zugrunde, ein Halteelement der eingangs genannten Art so zu gestalten, daß ein erweiterter Anwendungsbereich gegeben ist.

Diese Aufgabe wird erfindungsgemäß dadurch gelöst, daß der Haltebereich des dritten Teils als mit mindestens einer Profilierung versehener, in die Öffnung eines Trägers einlagerbarer Zapfen ausgebildet ist. Damit ist es möglich, das gesamte Halteelement in einer Trägeröffnung zu befestigen, so daß sich eine Erweiterung des Anwendungsbereichs des Halteelements ergibt.

Um den Zapfen funktionssicher in eine Trägeröffnung einzuführen, kann in weiterer Ausgestaltung der Erfindung die Stirnseite des Zapfens kegelförmig ausgebildet sein. Hieran können sich mehrere, kegelförmig ausgebildete Haltelippen anschließen, welche sich zumindest über einen Teil des Zapfenumfangs erstrecken. Diese auf dem Zapfen hintereinander angeordneten Haltelippen legen sich an den Umfang der Öffnung des Trägers an und vermitteln somit einen festen Sitz des Halteelements in der Trägeröffnung. Ist die Dicke des Trägers geringer als die Länge des Zapfens, so können die im vorderen Bereich liegenden Haltelippen über die Trägeröffnung hinausgreifen und damit eine zusätzliche Verriegelung auf der den drei Teilen des Halteelements gegenüberliegenden Seite bewirken.

In weiterer Ausgestaltung der Erfindung können die Haltelippen unterbrochen ausgebildet sein, wobei der Zapfen zwei einander gegenüberliegende, die umlaufenden Haltelippen unterbrechende, glatte Bereiche aufweisen kann. Um die Positionierung des Zapfens innerhalb der Trägeröffnung zu verbessern, kann der Zapfen an der dem ersten und zweiten Teil zugekehrten Seite hinter der letzten Haltelippe mindestens zwei, über den Umfang verteilte Positionierverdickungen aufweisen.

Alternativ besteht auch die Möglichkeit, bei einem Halteelement der eingangs genannten Art den Haltebereich des dritten Teils als Pfeilfuß auszubilden. Hierbei kann der Pfeilfuß z.B. zwei federnde, einander gegenüberliegende, konisch zulaufende, die Öffnung eines Trägers hintergreifende Rastelemente aufweisen, welche im vorderen Bereich an einem Grundkörper angeordnet sind. Dieser Grundkörper kann einen im Inneren des zweiten Teils angeordneten Befestigungsbereich übergehen.

Eine andere Ausführungsvariante besteht darin, daß bei dem Halteelement der eingangs genannten Art der Haltebereich des dritten Teils als Spreizniet ausgebildet ist. Diese Spreizniet kann hierbei einen Längsschlitz, einander gegenüberliegende, mit Abstufungen versehene Haltebereiche sowie einen in eine konisch zulaufende Öffnung einlagerbaren Spreizzapfen aufweisen. Weiterhin kann der Spreizniet mit einem im Inneren des zweiten Teils angeordneten Befestigungsbereich verbunden sein.

Zur Befestigung des Zapfens bzw. des Grundkörpers bzw. der Spreizniet können die jeweiligen Elemente mit einem im Inneren des zweiten Teils angeordneten Befestigungsbereich verbunden sein. Dieser Befestigungsbereich kann rotationssymmetrisch ausgebildet sein.

Nach einem anderen Merkmal der Erfindung kann der Befestigungsbereich mit dem zweiten Teil über mindestens eine Rast und Gegenrast verbunden sein. Alternativ besteht die Lösung, daß der Befestigungsbereich mit dem zweiten Teil durch ein an sich bekanntes Zweikomponenten-Spritzverfahren verbunden ist. Hierdurch ergibt sich eine einfache Ausgestaltung, da durch die bekannte Zweikomponenten-Spritztechnik eine Materialbindung zwischen dem zweiten und dem dritten Teil bereits bei der Herstellung geschaffen wird.

Nach einem weiteren Merkmal der Erfindung kann das zweite Teil an seinem Außenumfang einen umlaufenden Flansch aufweisen, welcher in einer Ausnehmung des ersten Teils eingelagert ist. Dieser Flansch kann aus einem zylindrischen und einem kegelstumpfförmigen, der Unterseite des Halteelements zugewandten Bereich bestehen. Weiterhin ist der Flansch über mehrere Stege mit einem zylindrischen Bereich verbunden, welcher den Befestigungsbereich des dritten Teils haltert. Hierbei können insgesamt vier Stege zur Verbindung des Flansches mit dem zylindrischen Bereich Anwendung finden.

Die Erfindung wird nachfolgend anhand von in der Zeichnung dargestellten Ausführungsbeispielen näher beschrieben. In der Zeichnung zeigen:
- Fig. 1: eine Seitenansicht des Halteelements
- Fig. 2: eine Vorderansicht des Halteelements
- Fig. 3: eine Unteransicht des Halteelements
- Fig. 4: einen Schnitt gemäß der Linie IV - IV nach Fig. 3
- Fig. 5: eine andere Ausführungsform der Erfindung in Seitenansicht
- Fig. 6: die Ausführungsform nach Fig. 5 in Vorderansicht
- Fig. 7: eine dritte Ausführungsvariante des Halteelements in Seitenansicht

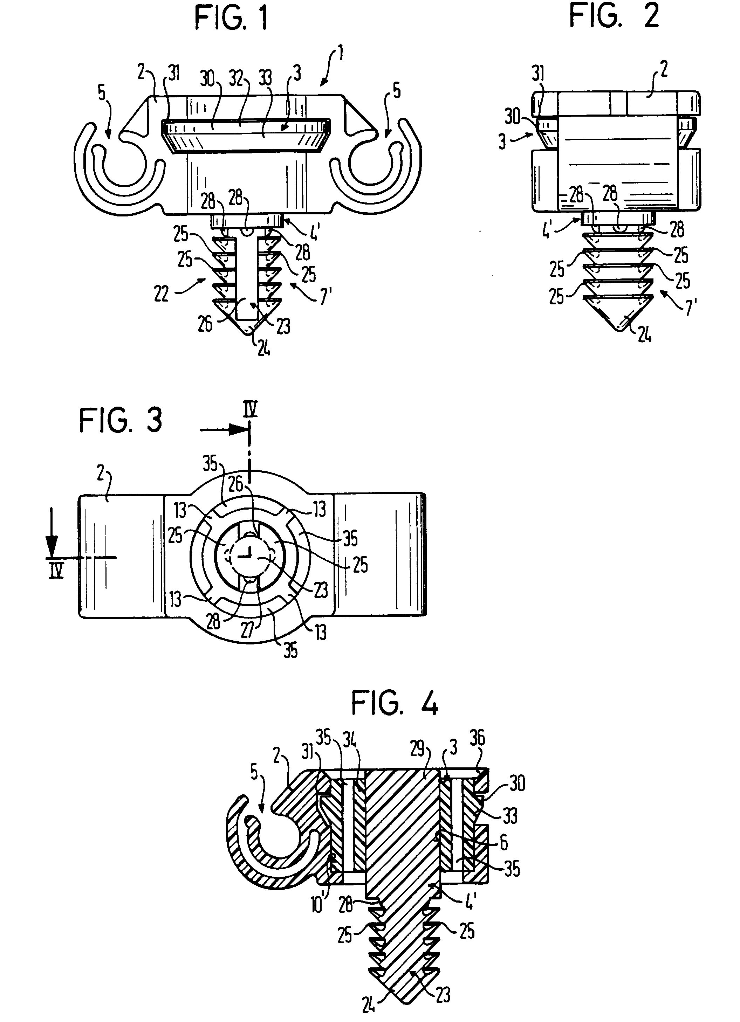

Das in den Figuren 1 - 4 dargestellte Halteelement 1 aus Kunststoff besteht aus drei Teilen, nämlich einem ersten Teil 2 aus hartem Material, welches im vorliegenden Ausführungsbeispiel zwei Lagerbereiche 5 aufweist, einem zweiten Teil 3 aus weichem, dämpfendem Material und einem dritten Teil 4' aus hartem Material. Das dritte Teil 4' ist hierbei über eine durchgehende Öffnung 6 nach Fig. 4 in dem zweiten Teil 3 eingelagert und weist einen Haltebereich 7' auf, welcher zwischen den beiden Lagerbereichen 5' des ersten Teils 2 angeordnet ist.

Aus den Figuren 1 - 4 ist erkennbar, daß der Haltebereich 7' des dritten Teils 4' als mit mindestens einer Profilierung 22 versehener Zapfen 23 ausgebildet ist. Dieser mit den Profilierungen 22 versehene Zapfen 23 ist in die Öffnung eines nicht näher dargestellten Trägers einlagerbar.

Um die Montage des Halteelements 1 in der vorgenannten Trägeröffnung einfach und schnell durchzuführen, ist die Stirnseite 24 des Zapfens 23 kegelförmig ausgebildet. An diese kegelförmige Stirnseite 24 schließen sich als Profilierung 22 mehrere, kegelförmig ausgebildete Haltelippen 25 an. Diese Haltelippen 25 weisen gemäß Fig. 4 Schalenform auf mit elastsischen Bereichen, welche sich an den Innenumfang einer nicht näher dargestellten Trägeröffnung anlegen und damit eine Haltewirkung herbeiführen.

Die Haltelippen 25 erstrecken sich zumindest über einen Teil des Zapfenumfangs, wobei aus Fig. 1 und 3 ersichtlich ist, daß der Zapfen 23 zwei einander gegenüberliegende, die umlaufenden Haltelippen 25 unterbrechende, glatte Bereiche 26 und 27 aufweist.

Um den Zapfen 23 innerhalb der Trägeröffnung einwandfrei zu zentrieren und zu positionieren, können beispielsweise vier, über den Umfang verteilte Positionierverdickungen 28 vorgesehen sein, welche an der, dem ersten Teil 2 und dem zweiten Teil 3 zugekehrten Seite hinter der letzten Haltelippe 25 angeordnet sind. Diese Positionierverdickungen 28 bewirken im Zusammenhang mit den elastischen Außenbereichen der Haltelippen 25 einen einwandfreien, zentrierten und festen Sitz des Halteelements 1 innerhalb einer Trägeröffnung.

Aus Fig. 4 geht hervor, daß der Zapfen 23 in einen im Inneren des zweiten Teils 3 angeordneten Befestigungsbereich 29 übergeht. Dieser Befestigungsbereich 29 kann rotationssymmetrisch ausgebildet sein, beispielsweise in Form eines Vollzylinders. Dieser Vollzylinder füllt die Öffnung 6 des zweiten Teils 3 aus.

Zur Verbindung des Befestigungsbereichs 29 mit dem zweiten Teil 3 kann mindestens eine Rast oder eine Gegenrast vorgesehen sein.

Bei dem Ausführungsbeispiel nach Fig. 4 ist der Befestigungsbereich 29 mit dem zweiten Teil 3 durch ein an sich bekanntes Zweikomponenten-Spritzverfahren verbunden. Damit bilden die Teile 3 und 4' im Anschluß an die Herstellung durch die Zweikomponenten-Spritztechnik über die Materialbindung eine gemeinsame Einheit.

Das zweite Teil 3 weist gemäß Fig. 4 an seinem Außenumfang einen umlaufenden Flansch 30 auf, welcher in einer Ausnehmung 31 des zweiten Teils 2 eingelagert ist. Diese Ausnehmung 31 ist gemäß Fig. 1 der Form des ersten Teils angepaßt; besteht der Flansch 30 beispielsweise, wie im vorliegenden Ausführungsbeispiel, aus einem zylindrischen Teil 32 und einem kegelstumpfförmigen Teil 33, so weist die Ausnehmung 31 des ersten Teils 2 die entsprechende äquidistante Form auf. Dieser Flansch 30 erstreckt sich gemäß Fig. 2 etwa bis an die Außenkontur des ersten Teils 2.

Aus Fig. 3 und 4 ist ersichtlich, daß der Flansch 30 über mehrere Stege 13 mit einem zylindrischen Bereich 34 verbunden ist. Bei dem vorliegenden Ausführungsbeispiel liegen vier Stege 13 einander gegenüber. Zwischen den Stegen 13 ergibt sich jeweils ein Zwischenraum 35.

Infolge dieser konstruktiven Gestaltung besteht die Möglichkeit, die eine gemeinsame Einheit bildenden Teile 3 und 4' von oben in das erste Teil 2' einzuschieben, wobei infolge der Zwischenräume 35 und des kegelstumpfförmigen Bereichs 33 der Flansch elastisch zurücktritt, bis er in der montierten Position die Lage nach Fig. 4 einnimmt, d. h. in der Ausnehmung 31 liegt.

Um diese Montage durchzuführen, weist das erste Teil 2 in seinem oberen Bereich eine schalenförmige Ausnehmung 36 auf, welche während des Montagevorganges der mit den Teilen 3 und 4' ein Zurücktreten des umlaufenden Flansches 30 erleichtert. Dieses Teil 2 weist darüber hinaus eine Aussparung 10' auf, welche ober- und unterhalb des Flansches 30 verlaufende zylindrische Bereiche des zweiten Teils 3 aufnehmen.

Ist statt der Haltelippen 25 der Zapfen 23, d. h. der Befestigungsbereich 7' mit einer gewindeartigen Profilierung versehen (nicht näher dargestellt), so kann der obere Teil des Befestigungsbereichs 29 mit einer Ausnehmung versehen sein. In diese Ausnehmung läßt sich ein Werkzeug einführen, so daß durch Drehen des gewindeförmigen Zapfens 23 dieser in eine entsprechende Trägeröffnung hinein bzw. aus dieser herausgedreht werden kann; damit läßt sich das Halteelement 1 von dem Träger lösen.

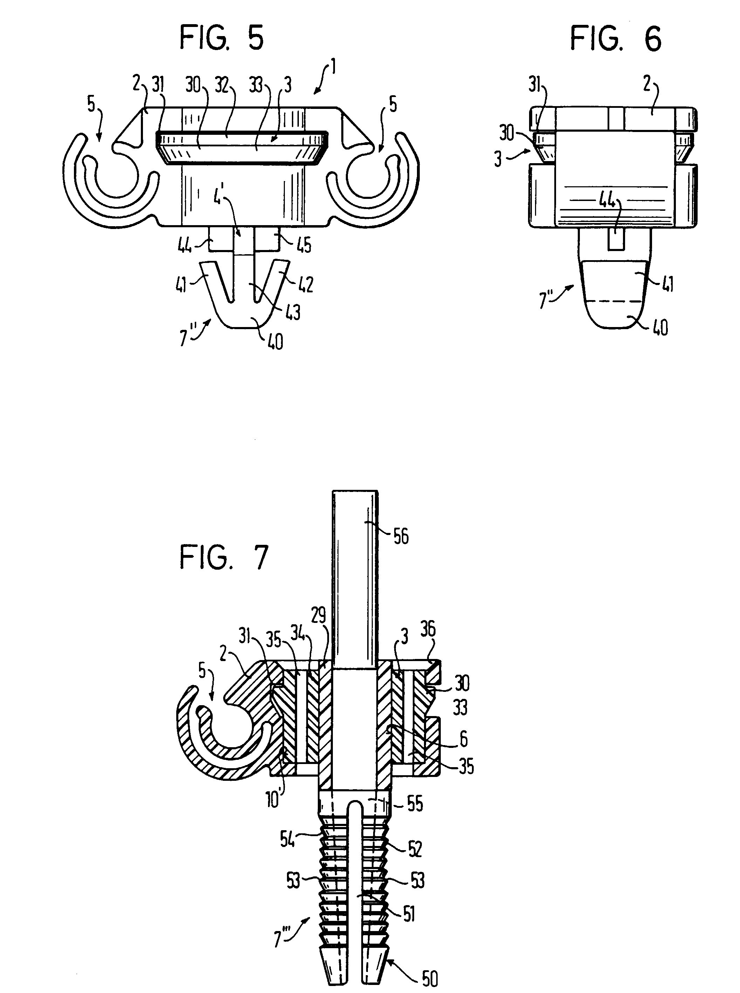

Bei der Ausführungsform nach Fig. 5 und 6 ist der Haltebereich 7'' des dritten Teils 4' als Pfeilfuß 40 ausgebildet. Hierbei kann dieser Pfeilfuß 40 zwei federnde, einander gegenüberliegende, konisch zulaufende, die Öffnung eines nicht näher dargestellten Trägers hintergreifende Rastelemente 41 und 42 auf. Diese Rastelemente sind im vorderen Bereich an einem Grundkörper 43 angeordnet. Alternativ besteht auch die nicht näher dargestellte Möglichkeit, einen federnden Rastfuß und ein starres Widerlagerelement einzusetzen.

Der Grundkörper 43 seinerseits geht in einen im Inneren des zweiten Teils 3 angeordneten Befestigungsbereich 29 über, und zwar analog der Ausführungsform nach Fig. 4. Auch bei dieser Ausführungsform ist der Befestigungsbereich 29 mit dem zweiten Teil 3 durch ein an sich bekanntes Zweikomponenten-Spritzverfahren verbunden. Damit bilden die Teile 3 und 4' im Anschluß an die Herstellung durch die Zweikomponenten-Spritztechnik über die Materialbindung wiederum eine gemeinsame Einheit.

Der Grundkörper kann darüber hinaus mit einander gegenüberliegenden Zentrierstegen 44 und 45 versehen sein, welcher auf den Durchmesser der Öffnung abgestellt ist, in welche der Haltebereich 7'' eingreift. Durch diese Zentrierstege auf der einen Seite der nicht näher dargestellten Trägeröffnung und die hintergreifenden Rastelemente 41 und 42 wird ein einwandfreier Sitz des erfindungsgemäßen Halteelements in einer Trägeröffnung gewährleistet.

Auch bei dieser Konstruktion weist der zweite Teil 3 einen umlaufenden Flansch 30 auf, welcher in einer Ausnehmung 31 des zweiten Teils 2 eingelagert ist. Der Flansch 30 seinerseits besteht aus einem zylindrischen Teil 32 und einem kegelstumpfförmigen Teil 33.

Fig. 7 stellt eine weitere Ausführungsvariante des erfindungsgemäßen Halteelements dar. Hier ist der Haltebereich 7''' des dritten Teils 4' als Spreizniet 50 ausgebildet. Der Spreizniet 50 kann mindestens einen Längsschlitz 51 sowie einander gegenüberliegende, mit Abstufungen 53 versehene bzw. abstufungsfreie Haltebereiche 52 und 54 aufweisen.

Weiterhin ist ein Spreizzapfen 56 vorgesehen, welcher in eine konisch zulaufende Öffnung 55 des Spreizniets einschlagbar ist, so daß hierdurch die beiden Haltebereiche 52 und 54 gespreizt werden und sich die Abstufungen 53 an den Innenumfang der Öffnung eines nicht näher dargestellten Trägers anlegen können.

Der Spreizniet 50 ist mit einem im Inneren des zweiten Teils 3 angeordneten Befestigungsbereich 29 verbunden.

Dieser Befestigungsbereich 29 ist analog den vorgenannten Ausführungsformen mit dem Zweiten Teil 3 durch das vorgenannte, an sich bekannte Zweikomponenten-Spritzverfahren verbunden. Wiederum weist der zweite Teil 3 darüber hinaus einen umlaufenden Flansch 30 auf, welcher in einer Ausnehmung 31 des zweiten Teils 2 eingelagert ist.

Durch die konstruktive Gestaltung des erfindungsgemäßen Halteelements ergibt sich ein erweiterter Anwendungsbereich bei funktionssicherer Halterung innerhalb der Öffnung eines Trägers.

## Patentansprüche

1. Halteelement (1) aus Kunststoff, mit einem, einen Lagerbereich aufweisenden ersten Teil (2) aus hartem Material zur Aufnahme mindestens eines rohrförmigen Teils, einem darin eingelagerten zweiten Teil (3) aus weichem, dämpfendem Material und einem in diesem über eine durchgehende Öffnung (6) eingelagerten, einen Haltebereich aufweisenden dritten Teil (4') aus hartem Material, wobei der Haltebereich (7') des dritten Teils (4') als mit mindestens einer Profilierung (22) versehener, in die Öffnung eines Trägers einlagerbarer Zapfen (23) ausgebildet ist.

2. Halteelement nach Anspruch 1, dadurch gekennzeichnet, daß die Stirnseite (24) des Zapfens (23) kegelförmig ausgebildet ist.

3. Halteelement nach Anspruch 1 und 2, dadurch gekennzeichnet, daß sich an die kegelförmige Stirnseite (24) mehrere, kegelförmig ausgebildete Haltelippen (25) anschließen.

4. Halteelement nach Anspruch 3, dadurch gekennzeichnet, daß sich die Haltelippen (25) zumindest über einen Teil des Zapfenumfanges erstrecken.

5. Halteelement nach Anspruch 4, dadurch gekennzeichnet, daß die Haltelippen (25) unterbrochen ausgebildet sind.

6. Halteelement nach Anspruch 5, dadurch gekennzeichnet, daß der Zapfen (23) zwei einander gegenüberliegende, die umlaufenden Haltelippen (25) unterbrechende glatte Bereiche (26, 27) aufweist.

7. Halteelement nach einem der vorhergehenden Ansprüche, dadurch gekennzeichnet, daß der Zapfen (23) an der dem ersten und zweiten Teil (2, 3) zugekehrten Seite hinter der letzten Haltelippe (25) mindestens zwei, über den Umfang verteilte Positionierverdickungen (28) aufweist.

8. Halteelement nach einem der vorhergehenden Ansprüche, dadurch gekennzeichnet, daß der Zapfen (23) in einen im Inneren des zweiten Teils (3) angeordneten Befestigungsbereich (29) übergeht.

9. Halteelement (1) aus Kunststoff, mit einem, einen Lagerbereich aufweisenden ersten Teil (2) aus hartem Material zur Aufnahme mindestens eines rohrförmigen Teils, einem darin eingelagerten zweiten Teil (3) aus weichem, dämpfendem Material und einem, in diesem über eine durchgehende Öffnung eingelagerten, einen Haltebereich aufweisenden dritten Teil (4') aus hartem Material, wobei der Haltebereich (7'') des dritten Teils (4') als Pfeilfuß (40) ausgebildet ist.

10. Halteelement nach Anspruch 9, dadurch gekennzeichnet, daß der Pfeilfuß (40) mindestens ein die Öffnung eines Trägers hintergreifendes Rastelement (41, 42) aufweist, welche im vorderen Bereich an einem Grundkörper (43) angeordnet ist.

11. Halteelement nach Anspruch 9 und 10, dadurch gekennzeichnet, daß der Grundkörper (43) in einen im Inneren des zweiten Teils (3) angeordneten Befestigungsbereich übergeht.

12. Halteelement (1) aus Kunststoff, mit einem, einen Lagerbereich aufweisenden ersten Teil (2) aus hartem Material zur Aufnahme mindestens eines rohrförmigen Teils, einem darin eingelagerten zweiten Teil (3) aus weichem, dämpfendem Material und einem in diesem über eine durchgehende Öffnung (6) eingelagerten, einen Haltebereich aufweisenden dritten Teil (4') aus hartem Material, wobei der Haltebereich (7''') des dritten Teils (4') als Spreizniet (50) ausgebildet ist.

13. Halteelement nach Anspruch 12, dadurch gekennzeichnet, daß die Spreizniet (50) mindestens einen Längsschlitz (51), einander gegenüberliegende, abstufungsfreie oder mit Abstufungen (53) versehene Haltebereiche (52, 54) und einen in eine konisch zulaufende Öffnung (55) einlagerbaren Spreizzapfen (56) aufweist.

14. Halteelement nach Anspruch 13, dadurch gekennzeichnet, daß der Spreizniet (50) mit einem im Inneren des zweiten Teils (3) angeordneten Befestigungsbereich (29) verbunden ist.

15. Halteelement nach Anspruch 8 oder 11 oder 14, dadurch gekennzeichnet, daß der Befestigungsbereich (29) rotationssymmetrisch ausgebildet ist.

16. Halteelement nach Anspruch 15, dadurch gekennzeichnet, daß der Befestigungsbereich (29) mit dem zweiten Teil (3) über mindestens eine Rast und Gegenrast verbunden ist.

17. Halteelement nach Anspruch 15, dadurch gekennzeichnet, daß der Befestigungsbereich (29) mit dem zweiten Teil (3) durch ein an sich bekanntes Zweikomponenten-Spritzverfahren verbunden ist.

18. Halteelement nach einem der vorhergehenden Ansprüche, dadurch gekennzeichnet, daß das zweite Teil an seinem Außenumfang einen umlaufenden Flansch (30) aufweist, welcher in einer Ausnehmung (31) des ersten Teils (2) eingelagert ist.

19. Halteelement nach Anspruch 18, dadurch gekennzeichnet, daß der Flansch (30) aus einem zylindrischen (32) und einem kegelstumpfförmigen (33), der Unterseite des Halteelements zugewandten Bereich besteht.

20. Halteelement nach Anspruch 19, dadurch gekennzeichnet, daß der Flansch (30) über mehrere Stege (13) mit einem zylindrischen Bereich (34) verbunden ist, welcher den Befestigungsbereich (29) des dritten Teils (4') haltert.

21. Halteelement nach Anspruch 20, dadurch gekennzeichnet, daß vier Stege (13) einander gegenüberliegen.

## Claims

1. Plastic retaining element (1) with a first part (2) which has a mounting region, is composed of hard material and serves to receive at least one tubular component, with a second part (3) which is embedded in the first part and is composed of soft, damping material, and with a third part (4') which is embedded in the second part by way of a through opening (6), has a retaining region and is composed of hard material, the retaining region (7') of the third part (4') being designed as a stud (23) which is provided with at least one profiled portion (22) and can be embedded in the opening in a support.

2. Retaining element according to Claim 1, characterized in that the end (24) of the stud (23) is of conical design.

3. Retaining element according to Claims 1 and 2, characterized in that the conical end (24) is adjoined by a plurality of retaining lips (25) of conical design.

4. Retaining element according to Claim 3, characterized in that the retaining lips (25) extend over at least part of the stud circumference.

5. Retaining element according to Claim 4, characterized in that the retaining lips (25) are of interrupted design.

6. Retaining element according to Claim 5, characterized in that the stud (23) has two mutually opposite smooth regions (26, 27) which interrupt the encircling retaining lips (25).

7. Retaining element according to one of the preceding claims, characterized in that the stud (23) has at least two thickened positioning features (28) distributed around the circumference behind the last retaining lip (25), at the end facing the first and the second part (2, 3).

8. Retaining element according to one of the preceding claims, characterized in that the stud (23) merges into a fixing region (29) arranged inside the second part (3).

9. Plastic retaining element (1) with a first part (2) which has a mounting region, is composed of hard material and serves to receive at least one tubular component, with a second part (3) which is embedded in the first part and is composed of soft, damping material, and with a third part (4') which is embedded in the second part by way of a through opening (6), has a retaining region and is composed of hard material, the retaining region (7") of the third part (4') being designed as an arrow-shaped foot (40).

10. Retaining element according to Claim 9, characterized in that the arrow-shaped foot (40) has at least one catch element (41, 42), which engages behind the opening in a support and is arranged in the forward region on a main body (43).

11. Retaining element according to Claim 9 and 10, characterized in that the main body (43) merges into a fixing region arranged inside the second part (3).

12. Plastic retaining element (1) with a first part (2) which has a mounting region, is composed of hard material and serves to receive at least one tubular component, with a second part (3) which is embedded in the first part and is composed of soft, damping material, and with a third part (4') which is embedded in the second part by way of a through opening (6), has a retaining region and is composed of hard material, the retaining region (7") of the third part (4') being designed as a split rivet (50).

13. Retaining element according to Claim 12, characterized in that the split rivet (50) has at least one longitudinal slot (51), mutually opposite retaining regions (52, 54) which are step-free or provided with steps (53), and an expansion stud (56) which can be embedded in a conically tapering opening (55).

14. Retaining element according to Claim 13, characterized in that the split rivet (50) is connected to a fixing region (29) arranged inside the second part (3).

15. Retaining element according to Claim 8 or 11 or 14, characterized in that the fixing region (29) is of rotationally symmetrical design.

16. Retaining element according to Claim 15, characterized in that the fixing region (29) is connected to the second part (3) by way of at least one catch feature and mating catch feature.

17. Retaining element according to Claim 15, characterized in that the fixing region (29) is connected to the second part (3) by a two-component injection process known per se.

18. Retaining element according to one of the preceding claims, characterized in that the second part has on its outer circumference an encircling flange (30) which is embedded in a recess (31) in the first part (2).

19. Retaining element according to Claim 18, characterized in that the flange (30) comprises a cylindrical region (32) and a frustoconical region (33) which faces the underside of the retaining element.

20. Retaining element according to Claim 19, characterized in that the flange (30) is connected by a plurality of webs (13) to a cylindrical region (34) which holds the fixing region (29) of the third part (4').

21. Retaining element according to Claim 20, characterized in that four webs (13) are situated opposite one another.

## Revendications

1. Elément de retenue (1) en matière plastique, comprenant une première partie (2) en un matériau dur, présentant une zone de montage et destinée à recevoir au moins une pièce tubulaire, une deuxième partie (3) en un matériau tendre à effet d'amortissement, intégrée dans la partie précitée, et une troisième partie (4') en un matériau dur, présentant une zone de retenue et intégrée, dans ladite partie, par l'intermédiaire d'un orifice ininterrompu (6), la zone de retenue (7') de la troisième partie (4') étant réalisée sous la forme d'un tenon (23) muni d'au moins un profilage (22), et pouvant être encastré dans l'ouverture d'un support.

2. Elément de retenue selon la revendication 1, caractérisé par le fait que la face extrême (24) du tenon (23) est de réalisation conique.

3. Elément de retenue selon les revendications 1 et 2, caractérisé par le fait que plusieurs lèvres de retenue (25), de réalisation tronconique, se rattachent à la face extrême conique (24).

4. Elément de retenue selon la revendication 3, caractérisé par le fait que les lèvres de retenue (25) s'étendent sur au moins une partie du pourtour du tenon.

5. Elément de retenue selon la revendication 4, caractérisé par le fait que les lèvres de retenue (25) sont de réalisation discontinue.

6. Elément de retenue selon la revendication 5, caractérisé par le fait que le tenon (23) présente deux régions lisses (26, 27) mutuellement opposées, interrompant les lèvres périphériques de retenue (25).

7. Elément de retenue selon l'une des revendications précédentes, caractérisé par le fait que le tenon (23) présente du côté tourné vers les première et deuxième parties (2, 3), derrière la dernière lèvre de retenue (25), au moins deux renflements de positionnement (28) répartis sur le pourtour.

8. Elément de retenue selon l'une des revendications précédentes, caractérisé par le fait que le tenon (23) fusionne dans une zone de fixation (29) située à l'intérieur de la deuxième partie (3).

9. Elément de retenue (1) en matière plastique, comprenant une première partie (2) en un matériau dur, présentant une zone de montage et destinée à recevoir au moins une pièce tubulaire, une deuxième partie (3) en un matériau tendre à effet d'amortissement, intégrée dans la partie précitée, et une troisième partie (4') en un matériau dur, présentant une zone de retenue et intégrée, dans ladite partie, par l'intermédiaire d'un orifice ininterrompu, la zone de retenue (7'') de la troisième partie (4') étant réalisée sous la forme d'une pointe de flèche (40).

10. Elément de retenue selon la revendication 9, caractérisé par le fait que la pointe de flèche (40) présente au moins un élément encliquetable (41, 42) qui emprisonne par-derrière l'ouverture d'un support, et est disposé dans la région antérieure d'un corps de base (43).

11. Elément de retenue selon les revendications 9 et 10, caractérisé par le fait que le corps de base (43) fusionne dans une zone de fixation située à l'intérieur de la deuxième partie (3).

12. Elément de retenue (1) en matière plastique, comprenant une première partie (2) en un matériau dur, présentant une zone de montage et destinée à recevoir au moins une pièce tubulaire, une deuxième partie (3) en un matériau tendre à effet d'amortissement, intégrée dans la partie précitée, et une troisième partie (4') en un matériau dur, présentant une zone de retenue et intégrée, dans ladite partie, par l'intermédiaire d'un orifice ininterrompu (6), la zone de retenue (7''') de la troisième partie (4') étant réalisée sous la forme d'un rivet à expansion (50).

13. Elément de retenue selon la revendication 12, caractérisé par le fait que le rivet à expansion (50) comprend au moins une fente longitudinale (51), des zones de retenue (52, 54) opposées l'une à l'autre, dépourvues de gradins ou munies de gradins (53), et une cheville d'écartement (56) pouvant être enfoncée dans un orifice (55) s'achevant tronconiquement.

14. Elément de retenue selon la revendication 13, caractérisé par le fait que le rivet à expansion (50) est relié à une zone de fixation (29) située à l'intérieur de la deuxième partie (3).

15. Elément de retenue selon la revendication 8 ou 11 ou 14, caractérisé par le fait que la zone de fixation (29) est réalisée avec symétrie de révolution.

16. Elément de retenue selon la revendication 15, caractérisé par le fait que la zone de fixation (29) est reliée à la deuxième partie (3) par l'intermédiaire d'au moins un cran et un cran complémentaire.

17. Elément de retenue selon la revendication 15, caractérisé par le fait que la zone de fixation (29) est reliée à la deuxième partie (3) par un procédé d'injection à deux composants, d'un type connu en soi.

18. Elément de retenue selon l'une des revendications précédentes, caractérisé par le fait que la deuxième partie présente, sur son pourtour extérieur, une aile circonférentielle (30) nichée dans un évidement (31) de la première partie (2).

19. Elément de retenue selon la revendication 18, caractérisé par le fait que l'aile (30) se compose d'une région cylindrique (32) et d'une région tronconique (33) qui est tournée vers la face inférieure de l'élément de retenue.

20. Elément de retenue selon la revendication 19, caractérisé par le fait que l'aile (30) est reliée, par l'intermédiaire de plusieurs nervures (13), à une région cylindrique (34) qui retient la zone de fixation (29) de la troisième partie (4').

21. Elément de retenue selon la revendication 20, caractérisé par le fait que quatre nervures (13) sont opposées les unes aux autres.
